# EUROPÄISCHE PATENTSCHRIFT

(11) **EP 0 603 363 B1**
(45) Veröffentlichungstag und Bekanntmachung des Hinweises auf die Patenterteilung: **29.05.1996**
(21) Anmeldenummer: 93914620.5
(22) Anmeldetag: 10.07.1993
(51) Int. Cl.: B29C 35/06, H01B 13/14

(54) **VERFAHREN ZUR KONTINUIERLICHEN KABELHERSTELLUNG MIT ABSCHEIDUNG DER ENTSTEHENDEN SPALTPRODUKTE UND ANLAGE ZUR DURCHFÜHRUNG DES VERFAHRENS**
PROCESS FOR CONTINUOUS CABLE PRODUCTION WITH CLEAVAGE PRODUCT SEPARATION AND INSTALLATION FOR IMPLEMENTING THE PROCESS
PROCEDE POUR LA FABRICATION EN CONTINU DE CABLES AVEC SEPARATION DES PRODUITS DE DEDOUBLEMENT ET INSTALLATION POUR LA MISE EN UVRE DU PROCEDE

(30) Priorität: 10.07.1992 DE 4222645
(43) Veröffentlichungstag der Anmeldung: 29.06.1994
(73) Patentinhaber: MASCHINENBAU SCHOLZ GMBH & CO. KG, D-48637 Coesfeld (DE)
(72) Erfinder: GRAEBER, August, D-48653 Coesfeld (DE); WERNER, Gerhard, D-48653 Coesfeld (DE)
(74) Vertreter: Döring, Wolfgang, Dr. Ing.
(86) Internationale Anmeldenummer: DE9300616
(87) Internationale Veröffentlichungsnummer: WO9401264

(56) Entgegenhaltungen:
- DE-A- 3 618 675
- US-A- 2 494 588
- US-A- 4 247 280
- US-A- 4 609 509

## Beschreibung

Die vorliegende Erfindung betrifft ein Verfahren zur kontinuierlichen Kabelherstellung, bei dem der extrudierte Kabelstrang zum Vernetzen durch ein CV-Rohr mit einer eine Gasatmosphäre aufweisenden Heizzone und einer sich daran anschließenden Kühlzone geführt wird.

Die Erfindung betrifft ferner eine Anlage zur Durchführung eines derartigen Verfahrens.

Derartige Verfahren und derartige Anlagen sind bekannt (DE-A-17 79 425). Der extrudierte Kabelstrang wird zum Aushärten (Vernetzen) des Kunststoffes durch ein sogenanntes CV-Rohr (kontinuierliche Vulkanisation) geführt, das eine Heizzone und eine anschließende Kühlzone aufweist. Innerhalb der Heizzone findet der Vernetzungsprozeß statt. Bei diesem Vernetzungsprozeß und den dort herrschenden Temperaturen entstehen jedoch unerwünschte gasförmige Spaltprodukte, die bei niedrigeren Temperaturen kondensieren und sowohl eine unerwünschte Verschmutzung des Rohres verursachen als auch bei Austritt aus dem Rohr die Umwelt erheblich beeinflussen können.

Die zunächst gasförmig anfallenden Spaltprodukte kondensieren in einem bestimmten Temperaturbereich an den kälteren Stellen des Vernetzungsrohres, insbesondere im Übergangsbereich zur Kühlzone, zu einer zähflüssigen, übel riechenden Substanz. Eine Ausscheidung dieser Spaltprodukte aus dem Rohr bei kontinuierlicher Fertigung ist erforderlich, um einerseits eine schnelle Verschmutzung des Rohres zu verhindern und andererseits die Belastung des Kühlwasserkreislaufes mit Schadstoffen möglichst gering zu halten. Weitere Spaltprodukte treten zusätzlich beim Entspannen der Anlage aus.

Um diese Spaltprodukte zu beseitigen, hat man bisher die im Übergangsbereich zwischen Heizzone und Kühlzone anfallenden Substanzen, die etwa eine ölige Konsistenz besitzen, in bestimmen Intervallen in Behälter abgeleitet. Desweiteren wurde das mit den Spaltprodukten angereicherte Gas der Heizzone, in der Regel Stickstoff, periodisch abgelassen, und es wurde neues, von Verunreinigungen freies Gas nachgefüllt. Letztendlich konnte durch diese Maßnahmen jedoch nicht vermieden werden, daß das Rohr immer mehr verschmutzte, so daß umfangreiche Reinigungsarbeiten erforderlich wurden, die eine Stillegung der Anlage benötigten. Sämtliche der vorstehend geschilderten Maßnahmen konnten daher das geschilderte Problem nicht grundsätzlich lösen.

Aus der US-A 4 609 509 sind ein Verfahren und eine Vorrichtung zum Vulkanisieren der Isolation eines elektrischen Kabels bekannt, bei dem bzw. der das mit der Isolation versehene Kabel durch ein CV-Rohr geführt wird, dessen Heizzone mit einer Flüssigkeit gefüllt ist. Während der Vulkanisation wird ein Teil der Flüssigkeit entfernt und zur Entfernung der Vulkanisationsprodukte behandelt. Hierzu wird die Flüssigkeit entgast, wobei sie in einem Entgaser auf eine große Fläche dispergiert wird, um hierdurch das Entweichen der gasförmigen Produkte zu erreichen.

Der Erfindung liegt die Aufgabe zugrunde, ein Verfahren und eine Anlage zur kontinuierlichen Kabelherstellung zu schaffen mit dem bzw. der die vorstehend geschilderten Verunreinigungen des Rohres, der Gasatmosphäre und/oder des Kühlwassers weitgehend vermieden werden.

Diese Aufgabe wird erfindungsgemäß beim Verfahren der angegebenen Art dadurch gelöst, daß das die während des Vernetzungsprozesses entstehenden gasförmigen Spaltprodukte enthaltende Gas im Endbereich der Heizzone kontinuierlich vom CV-Rohr abgezogen, zur Abtrennung der Spaltprodukte einem Aufbereitungsprozeß unterzogen und nach der Abtrennung am Eingangsbereich der Heizzone wieder in das CV-Rohr zurückgeführt wird.

Erfindungsgemäß wird somit das Gas der Heizzone (Stickstoff) kontinuierlich umgewälzt und dabei von den mitgeführten Spaltprodukten gereinigt und im gereinigten Zustand wieder erneut in das CV-Rohr eingeführt. Hierdurch werden die im Betrieb des Rohres permanent entstehenden Spaltprodukte kontinuierlich aus dem Rohr abgeführt und von der entsprechenden Gasatmosphäre getrennt. Die Spaltprodukte werden daher aus dem CV-Rohr in kontrollierter Weise über die abgeführte Gasatmosphäre abgezogen. Wesentlich ist hierbei, daß dieser Prozeß kontinuierlich während des Betriebes des CV-Rohres stattfindet, so daß dieses für die Durchführung von Reinigungsvorgängen nicht stillgelegt werden muß. Durch die kontinuierliche Aufbereitung der Gasatmosphäre außerhalb des CV-Rohres reduziert sich die Restmenge der Schadstoffe, die an die Atmosphäre oder an den Kühlwasserkreislauf abgegeben wird, auf ein Minimum.

Der Hauptschritt des Aufbereitungsprozesses besteht vorzugsweise aus einem Waschprozeß, dem das mit den Spaltprodukten belastete Gas unterzogen wird. In diesem Waschprozeß werden die Spaltprodukte vom Gas (Stickstoff) getrennt, so daß das Gas wieder in das CV-Rohr rückgeführt werden kann. Um ein vorzeitiges Kondensieren der Spaltprodukte auf dem Wege vom CV-Rohr bis zur Waschstation zu vermeiden, ist die entsprechende Gasabzugsleitung mit einer geeigneten Isolierung versehen, und/oder es ist eine Zusatzheizung vorgesehen.
Im Waschprozeß wird vorzugsweise mit Wasser als Waschmedium gearbeitet. Dabei wird eine relativ niedrige Wassertemperatur, beispielsweise 5°C, aufrechterhalten, um eine hohe Abscheidungsrate der Spaltprodukte zu erzielen.

Das nach dem Waschprozeß erhaltene gereinigte Gas wird vorzugsweise danach getrocknet, da es mit einem relativ hohen Feuchtigkeitsgrad versehen ist. Nach dem Trocknen wird das Gas zweckmäßigerweise vor dem Einführen in das CV-Rohr auf die entsprechende Betriebstemperatur des Eingangsbereiches der Heizzone des CV-Rohres erhitzt. Hierdurch wird durch die erfindungsgemäße Gasumwälzung der Betrieb des CV-Rohres nicht beeinflußt.

Vorzugsweise wird das Gas nach dem Waschen und vor dem Trocknen vorerhitzt.

Das im Waschprozeß anfallende, mit den Spaltprodukten belastete Wasser wird in Weiterbildung der Erfindung einem Trennvorgang zur Abtrennung der Spaltprodukte unterzogen, bei dem es sich vorzugsweise um eine Schwerkrafttrennung in einer Beruhigungszone handelt. Dabei setzen sich die schwereren Spaltprodukte ab und können gesammelt und weiter entsorgt werden. Die Abtrennung der Spaltprodukte aus dem beim Waschprozeß anfallenden Wasser kann auch alternativ oder zusätzlich über eine Kühlung, Salzzugabe oder andere vergleichbare Maßnahmen durchgeführt werden.

Vorzugsweise wird das im Waschprozeß anfallende, mit den Spaltprodukten belastete Wasser gesammelt und danach oder gleichzeitig dem Trennvorgang zur Abtrennung der Spaltprodukte unterzogen. Beim gleichzeitigen Sammeln und Trennen findet zweckmäßigerweise die vorstehend erwähnte Schwerkrafttrennung in einer Beruhigungszone Anwendung. Ein Sammelschritt und ein entsprechender Trennschritt können jedoch auch nacheinander durchgeführt werden.

Zusätzlich zu oder anstatt der vorstehend erwähnten Schwerkraftabscheidung kann der Trennvorgang durch Zentrifugieren durchgeführt werden. Diese Maßnahme hat den Vorteil, daß das Verfahren rascher abläuft als die erwähnte Schwerkraftabscheidung und daß hiermit eine besonders gute Trennung von Wasser und Spaltprodukten erreichbar ist, so daß nur noch eine geringere Menge von Wasser mit entsorgt werden muß. Das beim Zentrifugieren gewonnene gereinigte Wasser wird vorzugsweise in den Kreislauf zurückgepumpt. Die abgetrennten konzentrierten Spaltprodukte werden gesammelt und entsorgt.

Dadurch, daß das im Waschprozeß anfallende, mit den Spaltprodukten belastete Wasser vorzugsweise gesammelt wird, bevor es einem Trennprozeß durch Zentrifugieren unterzogen wird, kann eine diskontinuierlich arbeitende Zentrifuge (Separator) mit einer hohen Leistung von beispielsweise 50 l/h verwendet werden, die dann diskontinuierlich betrieben wird, wenn eine entsprechende Flüssigkeitsmenge angesammelt worden ist. Durch das Zentrifugieren ergeben sich etwa 1 - 2 % Feststoffe, die sich ablagern, 60 - 50 % Wasser und 39 - 48 % konzentrierte Spaltprodukte.

In Weiterbildung des erfindungsgemäßen Verfahrens wird zur Durchführung des Trennvorganges, beispielsweise durch Schwerkraftabscheidung und/oder Zentrifugieren, die Dichte der Wasserphase erhöht, was beispielsweise durch Salzzugabe erreicht werden kann, wobei insbesondere durch Zugabe einer 5 %igen Kochsalzlösung oder Natriumcarbonatlösung besonders gute Ergebnisse erreicht wurden. Hierdurch wird der Unterschied in den spezifischen Gewichten der Spaltprodukte und von Wasser erhöht, so daß die Spaltprodukte aufschwimmen. Auch beim Zentrifugieren läßt sich ein verbesserter Wirkungsgrad erzielen.

Eine weitere Möglichkeit zur Verbesserung des Trennvorganges besteht darin, das im Waschprozeß anfallende, mit den Spaltprodukten belastete Wasser zu erhitzen (beispielsweise auf 45°C), um hierdurch eine Erniedrigung der Dichte der Spaltprodukte zu erreichen.

Die vorstehend genannte Aufgabe wird ferner durch eine Anlage zur Durchführung des Verfahrens mit den Merkmalen des Patentanspruchs 13 gelöst. Die Anlage weist eine Aufbereitungsanlage für das Heizzonengas und einen vom Endbereich der Heizzone des CV-Rohres bis zu deren Eingangsbereich führenden Rohrkreis auf, in den die Aufbereitungsanlage geschaltet ist.

Die Aufbereitungsanlage umfaßt vorzugsweise als Hauptbestandteile einen Gaswäscher, einen nachgeschalteten Gastrockner und einen nachgeschalteten Erhitzer, um das gereinigte und getrocknete Gas wieder auf die Betriebstemperatur des CV-Rohres zu bringen. Dem Gaswäscher ist zweckmäßigerweise ein Kälteaggregat zugeordnet, um eine für die Abscheidungsrate der Spaltprodukte optimale Temperatur des Waschmediums (Wasser) im Gaswäscher aufrechtzuerhalten. Diese Temperatur beträgt vorzugsweise 5°C. Das Kälteaggregat weist einen in Form einer Rohrschlange durch den Gaswäscher geführten Kältekreis auf. Der Teil des Rohrkreises, der von CV-Rohr bis zum Gaswäscher führt, ist vorzugsweise isoliert, um in dieser Rohrleitung eine Kondensation (der Spaltprodukte) zu vermeiden. Vom Gaswäscher führt der Rohrkreis weiter zu dem erwähnten Gastrockner, bei dem es sich vorzugsweise um einen Adsorptionstrockner handelt. Dieser Adsorptionstrockner ist zweckmäßigerweise als Doppelanlage ausgeführt und schaltet bei Sättigung der jeweiligen Filtereinsätze automatisch um. Zur Regenerierung der Einsätze im Trockner wird ein Teil des umgewälzten Gases benutzt.

Vorzugsweise befindet sich zwischen dem Gaswäscher und dem Trockner ein Nacherhitzer, um das aus dem Gaswäscher tretende gereinigte, aber mit einem hohen Feuchtigkeitsgrad versehene Gas vor dem Trocknen vorzuerwärmen. Dem Trockner sind vorzugsweise ein Vor- und ein Nachfilter zugeordnet. Vorzugsweise wird im Adsorptionstrockner auf eine Taupunktfeuchte von -40°C getrocknet.

Der dem Adsorptionstrockner nachgeschaltete Erhitzer ist vorzugsweise ein elektrischer Erhitzer, bei dem die gewünschte Temperatur stufenlos eingestellt werden kann. Durch die Erhitzung auf ca. 400 - 420°C wird die relative Feuchte im Gas nochmals erheblich reduziert.

Bei Anlagenstopp wird das Gas im CV-Rohr über ein Ventil entspannt, welches zwischen dem Gaswäscher und dem Nacherwärmer angeordnet ist. Durch Ablaß des Gases an dieser Stelle wird auch das Restgas noch über den Gaswäscher geführt und somit gereinigt. Nach dem Entspannungsventil kann dieses Gas dann ohne weitere Trocknung in die Atmosphäre geleitet werden.

Das bei der Regeneration des Trockners entstehende Gas-Wasserdampf-Gemisch, das mit Geruchsstoffen angereichert ist, wird vorzugsweise über ein Aktivkohlefilter geführt, bevor es in die Atmosphäre abgeleitet werden kann.

In den Kreislauf des Waschmediums (Wassers) des Gaswäschers ist eine Trenneinheit geschaltet, in der die im Waschmedium mitgeführten Spaltprodukte vom Waschmedium abgetrennt werden. Diese Trenneinheit besteht vorzugsweise aus einem Behälter, in den das vom Gaswäscher abgezogene verunreinigte Waschmedium eingeführt wird. Vorzugsweise arbeitet die Trenneinheit mittels Schwerkrafttrennung, wobei die schwereren Spaltprodukte in der Nähe des Bodens der Trenneinheit aus dem Behälter abgezogen werden. Dies ist bei Kühlung der Fall. Bei Salzzugabe sind die Spaltprodukte leichter als die Wasser-Salzlösung. Hinter einer Trennwand wird das leichtere Wasser an einer höheren Stelle vom Behälter abgezogen und in den Gaswäscher zurückgeführt. Um eine derartige Funktionsweise zu sichern, weist die Trenneinheit zweckmäßigerweise entsprechende Niveauregler und Schalter auf. Im Behälter der Trenneinheit über dem Spiegel des Waschmediums befindet sich vorzugsweise ein Ventilator zum Absaugen (Reinigen), dem ein Aktivkohlefilter zugeordnet ist.

Bei dem vorstehend erwähnten Gas der Heizzone des CV-Rohres, das zur Abtrennung der Spaltprodukte erfindungsgemäß außerhalb des CV-Rohres aufbereitet und in den Eingangsbereich des CV-Rohres zurückgeführt wird, handelt es sich vorzugsweise um Stickstoff.

Zur Verwirklichung des Sammelschrittes des im Waschprozeß anfallenden, mit den Spaltprodukten belasteten Wassers weist die erfindungsgemäß ausgebildete Anlage zweckmäßigerweise einen Sammelbehälter auf, der über einen Rohrkreis mit dem Gaswäscher in Verbindung steht. Dieser Sammelbehälter kann gleichzeitig ein Absetzbecken für die Spaltprodukte aufweisen, mittels dem eine Schwerkraftabscheidung zur Durchführung des Trennvorganges durchgeführt wird. Der Sammelbehälter kann jedoch auch getrennt vom Absetzbecken angeordnet sein.

Wenn der Trennvorgang durch Zentrifugieren durchgeführt wird, besitzt die Anlage eine Zentrifuge (Separator), die anstelle des Absetzbeckens oder zusätzlich zum Absetzbecken angeordnet sein kann. Im zweiten Fall ist sie dem Absetzbecken nachgeschaltet, wobei das im Absetzbecken nach oben steigende, noch Spaltprodukte enthaltende Wasser abgezogen und der Zentrifuge zur Durchführung eines zweiten Trennvorganges zugeführt wird. Das hieraus resultierende gereinigte Wasser wird wieder in das Absetzbecken rückgeführt. Die abgetrennten Spaltprodukte werden in einem Sammelbehälter gesammelt und entsorgt.

Die Erfindung wird nachfolgend anhand eines Ausführungsbeispiels in Verbindung mit der Zeichnung im einzelnen erläutert. Es zeigen:
- Figur 1: eine schematische Darstellung einer Anlage zur Durchführung des erfindungsgemäßen Verfahrens;
- Figur 2: eine schematische Darstellung eines Zusatzteils der Anlage, wenn mit einer Zentrifuge gearbeitet wird; und
- Figur 3: einen Längsschnitt durch eine verwendete Zentrifuge.

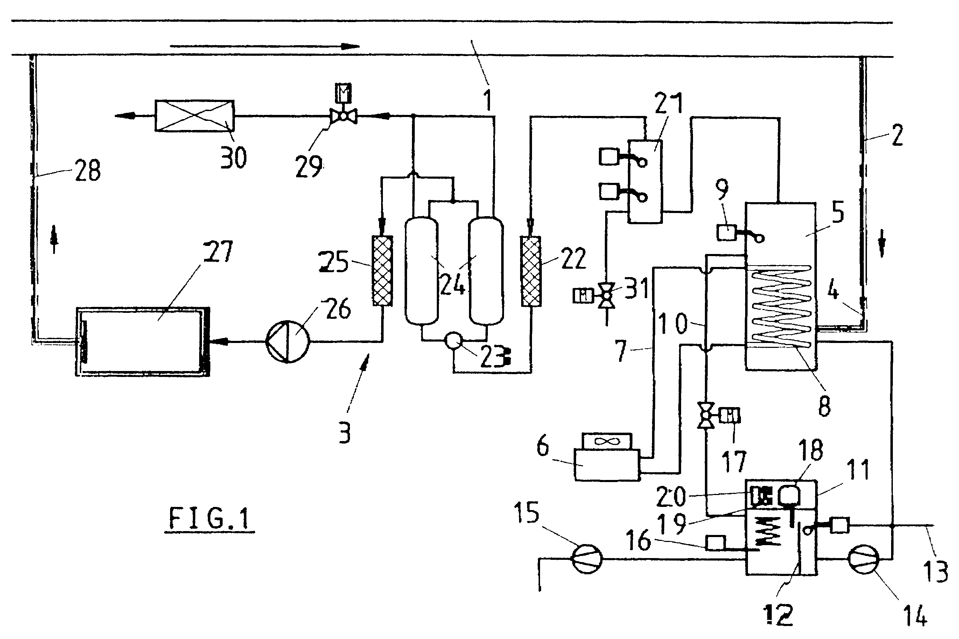

In Figur 1 ist das CV-Rohr zum Vernetzen der Kunststoffummantelung des Kabelstranges nur schematisch bei 1 gezeigt. Der zugehörige Pfeil gibt die Bewegungsrichtung des Kabels an. Bei dem hier gezeigten Ausschnitt des CV-Rohres handelt es sich um die Heizzone desselben, der eine Kühlzone (nicht gezeigt) nachgeschaltet ist.

Vom Endbereich der Heizzone des CV-Rohres zweigt ein Rohrkreis 2 ab, der wieder in den Eingangsbereich der Heizzone des CV-Rohres zurückgeführt ist. In diesen Rohrkreis 2 ist eine Aufbereitungsanlage 3 für die beim Vernetzen anfallenden Spaltprodukte geschaltet, die von dem in der Heizzone verwendeten Gas (Stickstoff) mitgeführt werden. In der Aufbereitungsanlage 3 werden die Spaltprodukte vom Gas abgetrennt, so daß dieses im gereinigten Zustand wieder dem CV-Rohr zugeführt werden kann.

Um ein vorzeitiges Kondensieren der Spaltprodukte beim Austritt aus dem CV-Rohr und damit die Bildung der unerwünschten öligen Substanzen im Rohrkreis 2 zu verhindern, ist der vom CV-Rohr bis zur ersten Stufe (Gaswäscher 5) der Aufbereitungsanlage 3 führende Abschnitt des Rohrkreises isoliert, wie bei 4 gezeigt. Der Gaswäscher 5 besteht aus einer Kammer, in der eine einen Teil eines Kältekreises 7 bildende Kühlschlange 8 angeordnet ist. Die Kammer ist bis zu einem bestimmten Niveau mit Wasser gefüllt, das als Waschmedium für das Gas dient. Das entsprechende Niveau wird über einen Niveauschalter 9 überwacht. Im Kältekreislauf 7 befindet sich ein Kälteaggregat 6, das über ein durch die Kühlschlange 8 geführtes Kältemittel die Temperatur des Wassers im Gaswäscher 5 auf 5°C hält. Diese Temperatur garantiert eine optimale Abscheidungsrate der Spaltprodukte vom Gas. Das Gas wird unten in die Kammer des Gaswäschers 5 eingeführt und steigt durch das darin enthaltene Wasser nach oben. Hierdurch werden die Spaltprodukte vom Gas getrennt, gehen in das Wasser über und werden über einen Wasserkreis 10 aus der Kammer des Gaswäschers geführt. Der Niveauregler (Schwimmerschalter) 9 überwacht das Wasserniveau im Gaswäscher. Bei Überschreiten eines bestimmten Wasserstandes wird das mit Spaltprodukten angereicherte Wasser über den Wasserkreis 10 in eine Trenneinheit 11 abgelassen. In dieser Zweikammer-Trenneinheit 11 werden die kondensierten Spaltprodukte vom Wasser getrennt. Dies geschieht in einem Beruhigungsraum innerhalb der Trenneinheit 11 mittels Schwerkrafttrennung. Dabei sinken die schwereren Spaltprodukte bei Kühlung nach unten ab und werden über eine Pumpe 15 zur weiteren Entsorgung in ein geeignetes Sammelgefäß (nicht gezeigt) geführt. In der Trenneinheit 11 befindet sich eine Trennwand 12, die die Trenneinheit in zwei Kammern unterteilt. Diese Trennwand wird vom Wasser überflossen. Aus der hierdurch gebildeten zweiten Kammer wird über eine Pumpe 14 gereinigtes Wasser abgezogen und in den Gaswäscher 5 zurückgepumpt. Die Frischwasserzufuhr für die Trenneinheit 11 ist bei 13 angedeutet. Mit 16 ist ein auf das spezifische Gewicht ansprechender Schalter gezeigt, der die Pumpe 15 zum Abziehen der Spaltprodukte steuert. Über dem Wasserniveau befinden sich in der Trenneinheit ein Niveauregler 18, ein Ventilator 19 und ein Aktivkohlefilter 20. Der Ventilator dient zum Absaugen von Restgasen, die über das Aktivkohlefilter geführt werden.

Bei normalem Betrieb werden stündlich ca. 2-3 l gereinigtes Wasser von der Pumpe 14 aus der Trenneinheit 11 in den Gaswäscher 5 zurückgeführt.

Das gereinigte Gas wird oben aus der Kammer des Gaswäschers 5 abgezogen und in einem Nacherhitzer 21 vorgewärmt. Dann wird das vorgewärmte Gas über ein Vorfilter 22 in einen Adsorptionstrockner 24 geführt, der als Doppelanlage ausgeführt ist, die bei Sättigung der Filtereinsätze automatisch umschaltet. Bei 23 ist ein entsprechender Umschalthahn angedeutet. Das getrocknete Gas verläßt das Adsorptionsfilter 24 und wird über ein Nachfilter 25 über eine Umwälzpumpe 26 einem elektrischen Erhitzer 27 zugeführt, der das getrocknete Gas wieder auf die Betriebstemperatur der Heizzone des CV-Rohres 1 bringt. Das Gas wird dann über eine isolierte Rohrleitung 28 wieder in den Eingangsbereich der Heizzone des CV-Rohres eingeführt. Die gewünschte Gastemperatur kann stufenlos eingestellt werden. Im Erhitzer 27 wird das Gas auf ca. 400 - 420°C erhitzt, woduch die relative Feuchte im Gas nochmals erheblich reduziert wird. Die Leistung der Umwälzpumpe 26 ist so bemessen, daß das Gasvolumen der Heizzone einschließlich Volumen des Aufbereitungsrohrkreises ca. fünfmal stündlich umgewälzt wird.

Bei Anlagenstopp wird das Gas im CV-Rohr über ein Ventil 31 entspannt, welches zwischen dem Gaswäscher 5 und dem Nacherwärmer 21 angeordnet ist. Durch Ablaß des Gases an dieser Stelle wird auch das Restgas noch über den Wäscher geführt und somit gereinigt.

Zur Regenerierung der Einsätze im Adsorptionstrockner 24 wird ein Teil des umgewälzten Gases benutzt. Das mit Geruchsstoffen angereicherte Gas-Wasserdampf-Gemisch, welches bei der Regenerierung des Trockners 24 entsteht, wird über eine Rohrleitung, ein Ventil 29 und ein Aktivkohlefilter 30 aus dem Trockner abgezogen, bevor es in die Atmosphäre abgeleitet wird.

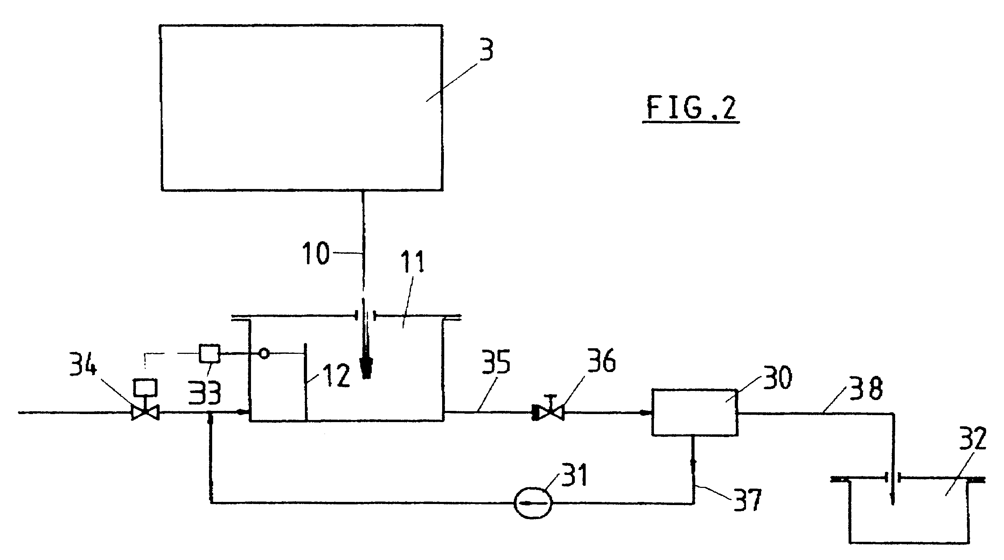

Figur 2 zeigt schematisch eine weitere Ausführungsform einer Aufbereitungsanlage, die zusätzlich mit einer Zentrifuge 30 (Separator) versehen ist. Hierbei ist die eigentliche Aufbereitungsanlage schematisch mit 3 bezeichnet. Diese besitzt den gleichen Aufbau wie bei der Anlage der Figur 1. Das mit Spaltprodukten angereicherte Wasser wird über den Wasserkreis 10 in die Trenneinheit 11 abgelassen, die gleichzeitig als Sammelbehälter dient. In dieser Zweikammer-Trenneinheit 11 werden die kondensierten Spaltprodukte vom Wasser getrennt, was ebenfalls in einem Beruhigungsraum innerhalb der Trenneinheit 11 mittels Schwerkrafttrennung geschieht. Insofern unterscheidet sich die Trenneinheit 11 ebenfalls nicht von der in Figur 1 gezeigten. Ein Schwimmerschalter 33 steuert ein Ventil 34 für die Frischwasserzufuhr zur Trenneinheit.

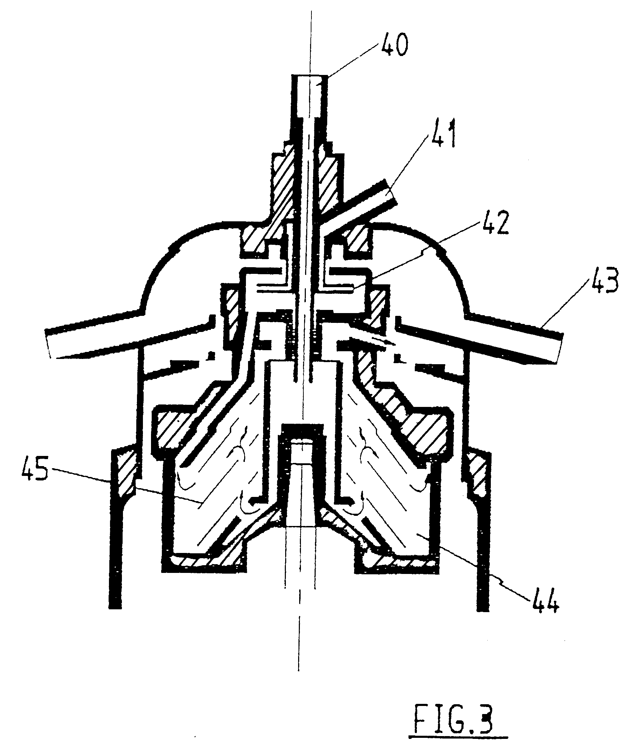

Aus der Beruhigungszone wird über eine Leitung 35 das mit Spaltprodukten angereicherte Wasser abgezogen und einer Zentrifuge (Separator) 30 zugeführt. Die Leitung 35 weist ein Absperrventil 36 auf. Der genaue Aufbau der Zentrifuge 30 wird in Verbindung mit Figur 3 beschrieben. Das durch Zentrifugieren rückgewonnene im wesentlichen reine Wasser wird über eine Leitung 37 abgezogen und mit Hilfe einer Förderpumpe 31 der Frischwasserzufuhr der Trenneinheit 11 wieder beigemischt. Die konzentrierten Spaltprodukte werden über eine Leitung 38 von der Zentrifuge abgezogen und in einen geeigneten Sammelbehälter 32 geführt. Von dort können sie entsprechend entsorgt werden.

Figur 3 zeigt einen Längsschnitt durch die Zentrifuge 30. Eine Zentrifuge dieser Bauart eignet sich insbesondere zur Trennung von Flüssigkeiten mit geringem Anteil an leichter Flüssigkeit, d. h. zur Trennung des Restanteils Wasser von den Spaltprodukten. Das Gemisch wird über einen Zulauf 40 eingeführt und gelangt von dort in einen mit rotierenden Tellerpaketen 45 versehenen Trennraum. Das Gemisch wird mit einer Drehkraft beaufschlagt, wobei das schwerere Wasser durch die Zentrifugalwirkung gegen den Umfang der Kammer geschleudert wird und von dort über einen Greifer 42 zum Auslaß 41 geleitet wird. Die leichteren Spaltprodukte treten frei in eine Auffanghaube aus und werden durch einen Ablauf 43 abgeleitet. Die Trommel ist hierbei so konstruiert, daß die am Greiferschacht ablaufende Flüssigkeit der oberen Greiferkammer zurück in den Zulauf gelangt.

Es versteht sich, daß die vorstehend beschriebene Zentrifuge nur ein Ausführungsbeispiel darstellt und durch andere geeignete Zentrifugen bzw. Separatoren ersetzt werden kann.

## Patentansprüche

1. Verfahren zur kontinuierlichen Kabelherstellung, bei dem der extrudierte Kabelstrang zum Vernetzen durch ein CV-Rohr mit einer eine Gasatmosphäre aufweisenden Heizzone und einer sich daran anschließenden Kühlzone geführt wird, dadurch gekennzeichnet, daß das die während des Vernetzungsprozesses entstehenden gasförmigen Spaltprodukte enthaltende Gas im Endbereich der Heizzone kontinuierlich vom CV-Rohr abgezogen, zur Abtrennung der Spaltprodukte einem Aufbereitungsprozeß unterzogen und nach der Abtrennung am Eingangsbereich der Heizzone wieder in das CV-Rohr zurückgeführt wird.

2. Verfahren nach Anspruch 1, dadurch gekennzeichnet, daß das mit Spaltprodukten belastete Gas im Aufbereitungsprozeß einem Waschprozeß, in dem die Spaltprodukte vom Gas abgetrennt werden, unterzogen wird.

3. Verfahren nach Anspruch 1 oder 2, dadurch gekennzeichnet, daß das Gas nach dem Waschen getrocknet wird.

4. Verfahren nach einem der vorangehenden Ansprüche, dadurch gekennzeichnet, daß das Gas nach dem Trocknen vor dem Einführen in das CV-Rohr auf die entsprechende Betriebstemperatur des Eingangsbereiches der Heizzone des CV-Rohres erhitzt wird.

5. Verfahren nach einem der vorangehenden Ansprüche, dadurch gekennzeichnet, daß das Gas nach dem Waschen und vor dem Trocknen vorerhitzt wird.

6. Verfahren nach einem der Ansprüche 2 bis 5, dadurch gekennzeichnet, daß das im Waschprozeß anfallende, mit den Spaltprodukten belastete Wasser gesammelt wird.

7. Verfahren nach einem der Ansprüche 2 bis 6, dadurch gekennzeichnet, daß das im Waschprozeß anfallende, mit den Spaltprodukten belastete Wasser einem Trennvorgang zur Abtrennung der Spaltprodukte unterzogen wird.

8. Verfahren nach Anspruch 7, dadurch gekennzeichnet, daß die abgetrennten Spaltprodukte gesammelt und weiter entsorgt werden.

9. Verfahren nach Anspruch 7 oder 8, dadurch gekennzeichnet, daß der Trennvorgang durch Schwerkraftabscheidung und/oder Zentrifugieren durchgeführt wird.

10. Verfahren nach Anspruch 9, dadurch gekennzeichnet, daß das im Waschprozeß anfallende, mit den Spaltprodukten belastete Wasser einem ersten Trennvorgang durch Schwerkraftabscheidung und das aus der Schwerkraftabscheidung resultierende noch belastete Wasser einem zweiten Trennvorgang durch Zentrifugieren unterzogen wird.

11. Verfahren nach einem der Ansprüche 7 bis 10, dadurch gekennzeichnet, daß zur Durchführung des Trennvorganges die Dichte der Wasserphase erhöht wird.

12. Verfahren nach einem der vorangehenden Ansprüche, dadurch gekennzeichnet, daß das im Waschprozeß anfallende, mit den Spaltprodukten belastete Wasser zur Durchführung des Trennvorgangs erhitzt wird.

13. Anlage zur Durchführung des Verfahrens nach einem der Ansprüche 1 bis 12, dadurch gekennzeichnet, daß sie eine Aufbereitungsanlage (3) für das Heizzonengas und einen vom Endbereich der Heizzone des CV-Rohres (1) bis zu deren Eingangsbereich führenden Rohrkreis (2) aufweist, in den die Aufbereitungsanlage geschaltet ist.

14. Anlage nach Anspruch 13, dadurch gekennzeichnet, daß die Aufbereitungsanlage (3) einen Gaswäscher (5) aufweist.

15. Anlage nach Anspruch 13 oder 14, dadurch gekennzeichnet, daß die Aufbereitungsanlage (3) einen Adsorptionstrockner (24) besitzt.

16. Anlage nach Anspruch 15, dadurch gekennnzeichnet, daß die Aufbereitungsanlage (3) einen zwischen den Gaswäscher (5) und den Adsorptionstrockner (24) geschalteten Nacherhitzer (21) aufweist.

17. Anlage nach einem der Ansprüche 15 oder 16, dadurch gekennzeichnet, daß dem Adsorptionstrockner (24) ein Erhitzer (27) nachgeschaltet ist.

18. Anlage nach einem der Ansprüche 15 bis 17, dadurch gekennzeichnet, daß der Adsorptionstrockner (24) als Doppelanlage ausgeführt ist.

19. Anlage nach einem der Ansprüche 14 bis 18, dadurch gekennzeichnet, daß dem Gaswäscher (5) ein Kältekreislauf (7) zugeordnet ist.

20. Anlage nach einem der Ansprüche 14 bis 19, dadurch gekennzeichnet, daß der Gaswäscher über einen Rohrkreis mit einem Sammelbehälter in Verbindung steht.

21. Anlagen nach einem der Ansprüche 14 bis 20, dadurch gekennzeichnet, daß der Gaswäscher (5) über einen Rohrkreis (10) mit einer Trenneinheit (11) in Verbindung steht, die ein Absetzbecken für die Spaltprodukte aufweist.

22. Anlage nach Anspruch 21, dadurch gekennzeichnet, daß die Trenneinheit (11) eine Zentrifuge (30) aufweist.

23. Anlage nach Anspruch 22, dadurch gekennzeichnet, daß die Zentrifuge (30) dem Absetzbecken nachgeschaltet ist.

## Claims

1. A process for continuously producing a cable, comprising feeding an extruded cable strand through a CV pipe for cross-linking, said CV pipe having a heating section with a gas atmosphere and a subsequent cooling section, characterized by continuously sucking off said gas containing the gaseous cleavage products developing during the cross-linking process from said CV pipe in the end portion of said heating zone, subjecting said gas a processing process for the separation of the cleavage products, and reintroducing said gas into said CV pipe at the inlet portion of the heating zone after said separation.

2. The process according to claim 1, characterized in that said gas loaded with cleavage products is subjected to a washing process in the processing process according to which the cleavage products are separated from said gas.

3. The process according to claim 1 or 2, characterized in that said gas is dried after washing.

4. The process according to one of the preceding claims, characterized in that said gas, after drying and prior to introducing into said CV pipe, is heated to the corresponding operation temperature of the inlet portion of the heating zone of said CV pipe.

5. The process according to one of the preceding claims, characterized by preheating said gas after washing and prior to drying.

6. The process according to one of the claims 2 to 5, characterized in that the water resulting from the washing process and loaded with the cleavage products is collected.

7. The process according to one of the claims 2 to 6, characterized in that the water resulting from the washing process and loaded with the cleavage products is subjected to a separation process for the separation of the cleavage products.

8. The process according to claim 7, characterized in that the separated cleavage products are collected and disposed.

9. The process according to claim 7 or 8, characterized in that the separation process is realized by gravity separation and/or centrifuging.

10. The process according to claim 9, characterized in that the water resulting from the washing process and loaded with the cleavage products is subjected to a first separation process by gravity separation, and the water resulting from the gravity separation which is still loaded with cleavage products is subjected to a second separation process by centrifuging.

11. The process according to one of the claims 7 to 10, characterized in that the density of the water phase is increased for carrying out the separation process.

12. The process according to one of the preceding claims, characterized in that the water resulting from the washing process and loaded with the cleavage products is heated for carrying out the separation process.

13. An installation for carrying out the process according to one of the claims 1 to 12, characterized in that it includes a processing installation (3) for the gas heating section and a pipe circuit (2) extending from the end portion of the heating zone of the CV pipe (1) to the inlet portion thereof and into which the processing installation is incorporated.

14. The installation according to claim 13, characterized in that the processing installation (3) includes a gas washer (5).

15. The installation according to claim 13 or 14, characterized in that the processing installation (3) includes an adsorption dryer (24).

16. The installation according to claim 15, characterized in that the processing installation (3) includes a post-heater (21) incorporated between the gas washer (5) and the adsorption dryer (24).

17. The installation according to claim 15 or 16, characterized in that a heater (27) is located downstream of the adsorption dryer (24).

18. The installation according to one of the claims 15 to 17, characterized in that the adsorption dryer (24) is a duplex installation.

19. The installation according to one of the claims 14 to 18, characterized in that the gas washer (5) is associated with a cooling circuit (7).

20. The installation according to one of the claims 14 to 19, characterized in that the gas washer (5) is connected to a collecting container by means of a pipe circuit.

21. The installation according to one of the claims 14 to 20, characterized in that the gas washer (5) is connected to a separation unit (11) by means of a pipe circuit (10), said separation unit (11) having a settling basin for the cleavage products.

22. The installation according to claim 21, characterized in that the separation unit (11) includes a centrifuge (30).

23. The installation according to claim 22, characterized in that the centrifuge (30) is located downstream of the settling basin.

## Revendications

1. Procédé de fabrication en continu de câbles au cours duquel pour être réticulé, le faisceau de câbles extrudé est passé à travers un tube de vulcanisation en ligne présentant une zone de chauffage dans laquelle est maintenue une atmosphère gazeuse, suivie d'une zone de refroidissement, caractérisé en ce que le gaz contenant des produits de réaction volatils dégagés pendant le processus de réticulation, est évacué en continu du tube de vulcanisation en ligne dans la partie aval de la zone de chauffage, soumis à un processus de préparation visant à en séparer les produits de réaction et après séparation réinjecté dans le tube de vulcanisation dans la partie amont de la zone de chauffage.

2. Procédé suivant la revendication 1, caractérisé en ce qu'au cours du processus de préparation, le gaz chargé des produits de réaction est soumis à une opération de lavage au cours duquel les produits de réaction sont séparés du gaz.

3. Procédé suivant la revendication 2, caractérisé en ce que le gaz est séché après le lavage.

4. Procédé suivant l'une des revendications précédentes, caractérisé en ce qu'après être séché et avant d'être réinjecté dans le tube de vulcanisation en ligne, le gaz est porté à la température de fonctionnement correspondante de la partie amont de la zone de chauffage du tube.

5. Procédé suivant l'une des revendications précédentes, caractérisé en ce que le gaz est préchauffé après le lavage et avant le séchage.

6. Procédé suivant l'une des revendications 2 à 5, caractérisé en ce qu'il consiste à collecter l'eau résultant du processus de lavage et chargée des produits de réaction.

7. Procédé suivant l'une des revendications 2 à 6, caractérisé en ce qu'il consiste à soumettre l'eau résultant du processus de lavage et chargée des produits de réaction à une opération de séparation pour en séparer les produits de réaction.

8. Procédé suivant la revendication 7, caractérisé en ce qu'il consiste à collecter les produits de réaction et ensuite à les rejeter.

9. Procédé suivant la revendication 7 ou 8, caractérisé en ce que l'opération de séparation est réalisé par gravité et/ou par centrifugation.

10. Procédé suivant la revendication 9, caractérisé en ce qu'il consiste à soumettre l'eau résultant du processus de lavage et chargée de produits de réaction d'abord à une première opération de séparation par gravité, et en ce que l'eau encore chargée résultant de cette séparation est soumise à une deuxième opération de séparation par centrifugation.

11. Procédé suivant l'une des revendications 7 à 10, caractérisé en ce que pour mettre en oeuvre l'opération de séparation, on augmente la densité de la phase aqueuse.

12. Procédé suivant l'une des revendications précédentes, caractérisé en ce que pour la mise en oeuvre de l'opération de séparation, il consiste à chauffer l'eau résultant du processus de lavage et chargée de produits de réaction.

13. Installation pour la mise en oeuvre du procédé suivant l'une des revendications 1 à 12, caractérisée en ce qu'elle comprend un dispositif de préparation (3) pour le gaz de la zone de chauffage et un circuit (2) associé au tube de vulcanisation en ligne (1) menant de l'extrémité aval de la zone de chauffage de ce tube à son extrémité amont, circuit dans lequel est inséré ledit dispositif de préparation.

14. Installation suivant la revendication 13, caractérisée en ce que le dispositif de préparation (3) comprend un dispositif de lavage de gaz (5).

15. Installation suivant la revendication 13 ou 14, caractérisée en ce que le dispositif de préparation (3) comprend un dispositif de séchage par adsorption (24).

16. Installation suivant la revendication 15, caractérisée en ce que le dispositif de préparation (3) comprend un dispositif de réchauffage (21) monté entre le dispositif de lavage de gaz (5) et le dispositif de séchage par adsorption (24).

17. Installation suivant la revendication 15 ou 16, caractérisée en ce qu'un dispositif de chauffage (27) est connecté en aval du dispositif de séchage par adsorption (24).

18. Installation suivant l'une des revendications 15 à 17, caractérisée en ce que le dispositif de séchage par adsorption (24) est réalisé sous la forme d'un dispositif double.

19. Installation suivant l'une des revendications 14 à 18, caractérisée en ce qu'un circuit de refroidissement (7) est associé au dispositif de lavage de gaz (5).

20. Installation suivant l'une des revendications 14 à 19, caractérisée en ce que le dispositif de lavage de gaz est en communication avec un récipient de collecte par l'intermédiaire d'une canalisation.

21. Installation suivant l'une des revendications 14 à 20, caractérisée en ce que le dispositif de lavage de gaz (5) est en communication avec une unité de séparation (11) par l'intermédiaire d'une canalisation (10), cette unité de séparation comprenant un bassin de rejet des produits de réaction.

22. Installation suivant la revendication 21, caractérisée en ce que l'unité de séparation (11) comprend une centrifugeuse(30).

23. Installation suivant la revendication 22, caractérisée en ce que la centrifugeuse (30) est connectée en aval du bassin de rejet.
